# EUROPEAN PATENT APPLICATION

(11) **EP 4 839 014 A1**
(43) Date of publication of application: **11.11.2026**
(21) Application number: 25174199.7
(22) Date of filing: 05.05.2025
(51) Int. Cl.: H04W 88/04

(54) **SYSTEM AND METHOD FOR IMPROVING UPLINK STRENGTH**

(71) Applicant: Telefónica Germany GmbH & Co. OHG, 80992 München (DE)
(72) Inventor: MÜLLNER, Robert, 81479 München (DE); WALZ, Eduard, 53347 Alfter (DE); WIDDER, Dr. Wolfgang, 82362 Weilheim (DE)
(74) Representative: Lorenz Seidler Gossel Part. mbB

(57) **Abstract**

The present invention offers a possibility of coverage extension without the need for the deployment of additional hardware, such as base stations. For this purpose, the present invention pertains to a method for improving uplink strength for mobile telecommunication, wherein if a mobile user equipment detects a need for improving uplink strength, the mobile user equipment performs a scan for the presence of at least one device suitable for telecommunication, and if at least one device is detected, the mobile user equipment enters a coupling mode to couple to the at least one device and induces the device to enter a passive mode, and the mobile user equipment controls the at least one device to replicate an uplink signal to be emitted by the mobile user equipment so that the mobile user equipment and the at least one device synchronously and / or simultaneously emit the uplink signal to thereby increase overall uplink signal strength; and / or the communication capabilities of mobile user equipment and the at least one device are identified and the device having the best communication capabilities is chosen to emit the uplink signal to be emitted by the mobile user equipment.

## Description

The present invention relates to the field of mobile telecommunication systems, and more particularly to a method and apparatus for improving uplink strength thereby extending the coverage area.

In poor coverage areas, subscribers typically use fixed-wireless-substitution products to provide indoor coverage. For outdoor areas, repeater systems are often used to provide coverage e.g., in tunnels. These solutions are used for static applications with known coverage holes.

For typical rural outdoor scenarios with unknown motion of the subscribers, the connection breaks once the mobile device reaches the coverage border of the network. The User Equipment (UE), e.g. a smartphone or tablet, remains unconnected and reconnects to the mobile network when the subscriber enters again the coverage area.

Such a coverage hole is typically closed by additional base stations that have to be deployed. In other words, conventional solutions to coverage extension are hardware driven and thus associated with considerable cost and effort.

Against this background, the present invention addresses the technical task of mitigating or even completely eliminating the disadvantages of the prior art.

In particular, the present invention is based on the specific task of providing a way of coverage extension at reduced cost and with improved flexibility.

This task is solved by a method with the features of claim 1 and the further objects of the independent claims.

Advantageous embodiments of the invention are the subject of the subclaims.

A first aspect of the invention pertains to a method for improving uplink strength for mobile telecommunication, wherein
if a mobile user equipment detects a need for improving uplink strength,
   - the mobile user equipment performs a scan for the presence of at least one device suitable for telecommunication, and
if at least one device is detected,
   - the mobile user equipment enters a coupling mode to couple to the at least one device and induces the device to enter a passive mode, and
   - the mobile user equipment controls the at least one device to replicate an uplink signal to be emitted by the mobile user equipment so that the mobile user equipment and the at least one device synchronously and / or simultaneously emit the uplink signal to thereby increase overall uplink signal strength, and / or
   - the communication capabilities of mobile user equipment and the at least one device are identified and the device (= apparatus, i.e. the user equipment or at least one device) having the best communication capabilities is chosen to emit the uplink signal to be emitted by the mobile user equipment.

In other words, if a mobile user equipment detects that it is present in a coverage hole, the mobile user equipment searches for other device present in the vicinity of the mobile user equipment that are capable of assisting the mobile user equipment in establishing a link to the next base station, either by replicating the uplink signal (i.e. the message is amplified and the signal thus strengthened) or by providing better communication capabilities (i.e. the message is sent by a device having a superior antenna).

Very conceptionally speaking, the present invention can be understood as relying on the principle that whereas a single voice may not be adequately heard, a multitude of voices in unison can be heard indeed (illustrated by Fig. 1 and 3) or a louder voice nearby can convey the message more reliably (illustrated in Fig. 4).

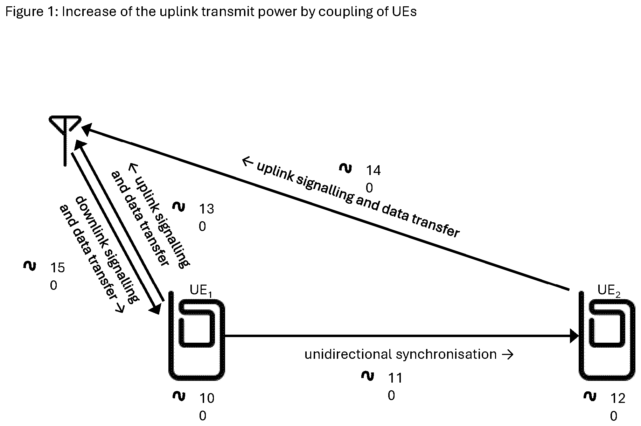

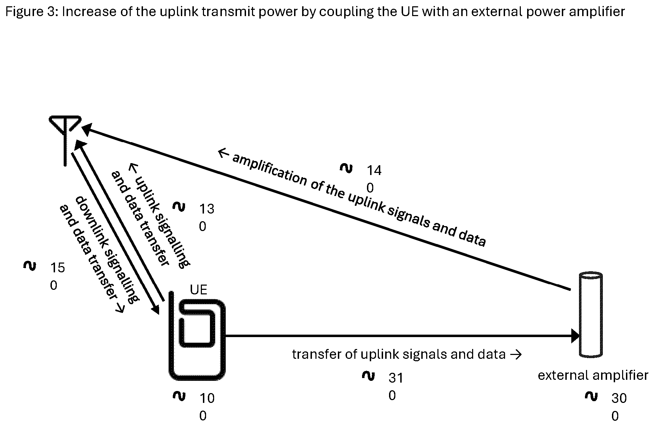

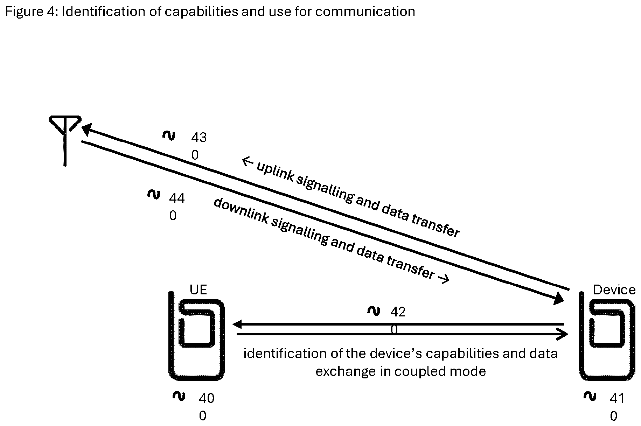

These two options are illustrated in exemplary fashion in Fig. 1 and 3 (multiple UEs replicate the uplink signal) and Fig. 4 (the UE having the best communication capabilities is used for sending the uplink signal), respectively. In the case of Fig. 4 from the coupled UEs and / or devices, that device or apparatus having the best communication capabilities is chosen for emitting the uplink signal.

Thus, in many cases, the deployment of further designated hardware, such as base-stations, may not be necessary to overcome the coverage hole, because in many cases in daily practice, several mobile user equipments enter a coverage hole concurrently (think of a group of passengers in a train entering a coverage hole) or in many locations of a coverage hole devices suitable for telecommunication are already present (think e.g. of devices equipped with Internet of Things-technology in a dense urban setting or an antenna of a car driving through a dense forest etc.).

The present invention thus can offer an efficient mechanism for a mobile user equipment entering a coverage hole to harness such already-present infrastructure (e.g. other mobile user equipments or devices suitable for telecommunication) in particular to boost uplink strength to overcome the local coverage hole and establish connectivity.

The present invention in other words provides an ad hoc coverage extension of the existing mobile network by strengthening the uplink signal of UEs in poorly covered areas, without the need of designated hardware deployment.

Once the uplink signals can be decoded by the base station and the UE can register to the network, according to the present invention preferably means are provided to improve not only the receive level of the uplink signal but also the quality of the uplink and downlink channels for the considered connection. Radio network coverage planning typically focusses on providing a specific minimum indoor receive level that exceeds the receiver sensitivity of the UE. Basis for radio network planning is the link budget calculation that includes the complete chain of all involved components in the path from transmitter to the receiver and considers both directions.

In other words, the present invention relates to a method for strengthening the uplink signal of a mobile user equipment by coupling several mobile user equipments or coupling a mobile user equipment to other devices suitable for telecommunication. This uplink coupling mode configuration can be used for the initial attach mechanism and / or procedure and / or process to get access to the mobile network and / or for the subsequent communication in poorly covered areas.

Based on the transmission of a preconfigured message including the position of the device and information about the identity of the serving cell, the network can then according to a method of the invention provide further means to improve the channel quality in uplink and downlink direction.

The mobile user equipment can for example be a smartphone, tablet or smartwatch and the device can also be a smartphone, tablet or smartwatch or any other device capable of increasing uplink strength or enhanceable to be capable of increasing uplink strength, such as an antenna, a device equipped with Internet of Things-Technology, a laptop or a power bank.

The mobile user equipment can couple to a single device or multiple devices. The multiple devices can all be of the same type (e.g. four smartphones) or of different types (e.g. a car antenna and a smartphone). This is illustrated in exemplary fashion in the figures.

When multiple devices are detected by the mobile user equipment, the mobile user equipment can enter a coupling mode to couple to each of the multiple devices and can induce each of the multiple devices to enter a passive mode.

The mobile user equipment can then control each of the multiple devices to replicate an uplink signal to be emitted by the mobile user equipment so that the mobile user equipment and each of the multiple devices synchronously emit the uplink signal to thereby increase overall uplink signal strength.

The term "replicate" is preferentially understood to mean that the devices copy the message of mobile user equipment and emit the identical message, e.g. in terms of frequency, timing, transmission power and / or data content.

The mobile user equipment can detect a maximum transmission strength of each of the multiple devices.

For example, if the mobile user equipment detects three other devices in the vicinity, wherein the mobile user equipments vary in maximum transmission strength (e.g. a high strength antenna of a TV set and a low strength antenna of an IoT gas meter), then these devices can be ranked by the mobile user equipment for their maximum transmission strength.

The term "vicinity" is preferentially understood to mean that the devices are present in a range or distance allowing adequate telecommunication with the mobile user equipment. The term does not mean that the devices have to be immediately adjacent or close to the mobile user equipment.

In the passive mode of the at least one device, the device preferentially does not process or execute any data received by the device in downlink direction and / or there is only unidirectional data flow from the mobile user equipment to the device having entered the passive mode.

In other words, in the passive mode, the device can be regarded as a passive slave of the mobile user equipment acting as master. The device preferentially stops its own intrinsic activity and merely serves the purpose of assisting the mobile user equipment in increasing uplink strength by replicating the uplink signal to be emitted by the mobile user equipment.

Further, there preferably is a unidirectional synchronisation established between the mobile user equipment and the at least one device when the device is in the passive mode and / or the mobile user equipment and the at least one device synchronously emit the uplink signal.

The term "unidirectional synchronisation" is preferentially understood to mean that one behaviour of one device is synchronised with the behaviour of the other device without the reverse also being true. Put more specifically, in the example of a master and slave, the slave copies the behaviour of the master and thus in synchronised with the master, without the opposite being true. Thus, the synchronisation is unidirectional.

Several trigger points are possible for the mobile user equipment to detect a need for improving uplink strength in a method according to the present invention.

For example, the mobile user equipment can detect a need for improving uplink strength:
1) if the mobile user equipment detects an interruption during an initial attach mechanism/procedure/process to a base station. In this case, the mobile user equipment detects that it is not possible to establish connectivity to a local base station.
   and / or
2) if a timer for the reception of a downlink message from the base station to the mobile user equipment has unsuccessfully expired. In this case, in a given time frame, no downlink message was received, so the user equipment detects insufficient connectivity.
   and / or
3) if a downlink receive level and / or a downlink receive quality from the base station to the mobile user equipment is detected by the mobile user equipment to be below a threshold level or outside a tolerance range. In this case, the downlink message may be received in time but is of such degraded quality, that the user equipment detects insufficient connectivity.

If the mobile user equipment detects a need for improving uplink strength, the mobile user equipment can automatically perform a scan for the presence of at least one device and / or automatically enter a coupling mode to couple to the at least one device.

Alternatively or additionally, the mobile user equipment may automatically open a User Interface, such as an application, to allow the user to manually instruct the mobile user equipment to perform a scan for the presence of at least one device and / or enter a coupling mode to couple to the at least one device and or to authorize such steps.

To further improve uplink strength, a method according to the present invention can provide a step of boosting uplink strength.

For example, when the mobile user equipment and the at least one device synchronously and / or simultaneously emit the uplink signal, the uplink signal strength can be boosted beyond nominal transmit power through temporary overpowering e.g. by use of a power capacitor in at least one of the mobile user equipment and the at least one device.

The power capacitor can be selectively discharged to temporarily push transmit power beyond the nominal transmit power.

If multiple devices are coupled to the mobile user equipment, he uplink signal strength can be boosted in all of these devices or only a sub set, for example in the device detected to have the strongest transmission power as a starting point.

The mobile user equipment and the at least one device can synchronously and / or simultaneously emit the uplink signal in a Random Access Channel procedure, preferably according to a pattern stored in a memory of the mobile user equipment, wherein the pattern is preferably linked to the International Mobile Equipment Identity of the mobile user equipment and / or the Physical Cell Identity of the base station the uplink signal is intended for.

To further increase transmit strength, the present invention can make use of wearables, such as wearables incorporated in equipment for particularly risky endeavours, such as cross-country skiing, in that ensuring mobile connectivity is essential.

For example, the device can be an external antenna, preferably an antenna configured to be wearable by a user of the mobile user equipment (e.g. think of antenna present in backpacks). In this case, the mobile user equipment is preferably configured to couple an internal antenna of the mobile user equipment with the external antenna to increase uplink signal strength.

To further increase user friendliness, the uplink signal that the mobile user equipment and the at least one device synchronously and / or simultaneously emit, can comprise a pre-configured message, preferably containing a location of the mobile user equipment and a Physical Cell Identity of a base station. In this case, the user who might experience an emergency situation, would not be required to type the message at hoc.

The mobile user equipment and the at least one device can proactively and repeatedly synchronously and / or simultaneously emit the uplink signal until the mobile user equipment receives an acknowledgement of receipt. This saves the user from having to re-initiate the emission procedure manually.

A method according to the present invention can further comprise a step for improving downlink strength, preferably by using dynamic bandwidth adaptation and / or concentration of transmit power in fewer Physical Resource Blocks.

A higher-level instance, preferably an Operations, Administration and Maintenance Unit can be used to monitor uplink and / or downlink signal strength of at least the mobile user equipment and / or the at least one device.

The higher-level station can then activate means to improve the uplink and / or downlink signal strength, for example, by changing a tilt angle of an antenna of a base station.

A further aspect of the present invention pertains to apparatus, preferably a mobile user equipment and / or device, configured to be used in and / or to perform a method according to the present invention.

The present invention also pertains to a system comprising a mobile user equipment and at least one device, configured to be used in and / or to perform a method according to the present invention. The system can comprise a mobile user equipment coupled to at least one device that is in passive mode.

A further aspect of the invention pertains to a computer programme product, comprising machine-readable instructions enabling an apparatus reading the instructions to perform a method according to the invention.

At this point, it should be noted that the terms "a" and "an" do not necessarily refer to exactly one of the elements, although this is a possible implementation, but can also refer to a plurality of the elements.

Similarly, the use of the plural also includes the presence of the element in question in the singular and, conversely, the singular also includes several of the elements in question.

Furthermore, all features of the invention described herein can be combined with each other or claimed in isolation from each other as desired, so the disclosure is not limited to explicitly named combinations of features.

Further features, effects, details and advantages of the invention are explained in more detail with reference to the embodiments shown in the drawings.

Here, identical reference signs denote identical or similar components.
- Fig. 1: shows an embodiment of the present invention in that two user equipments are coupled to increase uplink strength.

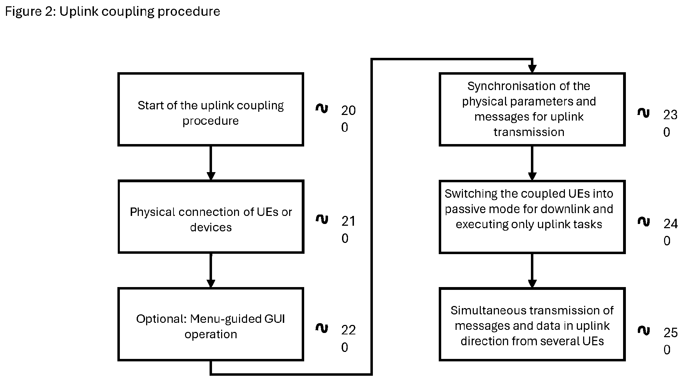

- Fig.2: shows a flow chart of a method according to the present invention.
- Fig. 3: shows an embodiment of the present invention in that a user equipment is coupled to a device, in this case an external amplifier, to increase uplink strength.
- Fig. 4: shows an embodiment of the present invention in that the communication capabilities of two user equipments are identified.

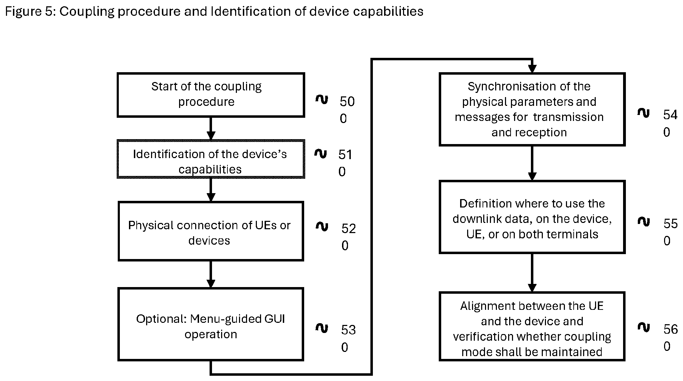

- Fig. 5: shows a flow chart of a method according to the present invention.

Further aspects of the invention can be described under reference to the figures as follows:
In the following, it is explained what is preferably meant by the terms uplink direction and thus uplink signal.

Starting point for the link budget calculation is the UE output power, which is typically 23 dBm (UE power class 3) in 3^{rd} Generation Partnership Project (3GPP) networks of the Fourth Generation (4G) and Fifth Generation (5G). The indoor penetration loss of e.g. 20 dB according to 3GPP TR 25.814 Annex A [1] is subtracted from the UE output power. The signal is further attenuated by the uplink path loss for the transmission via the air interface. A typical fading margin is considered for the path loss calculation. The signal transmitted via the air interface is received at the base station antenna, which has a characteristic gain of e.g. 14 dBi according to 3GPP TR 25.814 Annex A [1] including cable loss. The finally resulting receive level must be higher than the base station's receiver sensitivity. Characteristic values for hardware, frequency, and environment are used and the maximum achievable path loss is calculated.

In the following, it is explained what is preferably meant by the terms downlink direction and thus downlink signal.

For downlink direction the starting point of the link budget calculation is the base station output power, from which the cable loss is subtracted, and the antenna gain is added. The signal is further attenuated by the transmission via the air interface, for which the path loss and fading margin are considered. The indoor penetration loss is subtracted, and the signal received by the UE must be higher than its receiver sensitivity. Also, for downlink direction the maximum path loss is calculated and the minimum of both values, uplink and downlink path loss, defines the maximum coverage area of the cell.

In most of the cases, the uplink is the limiting factor due to the limited UE output power, whereas in downlink direction sufficient transmit power can be provided.

A focus of the present invention is to strengthen the uplink signal and thus to allow the UE to access the network also in areas that are outside the usual coverage area for example in hilly terrain, mountains, deep and dense indoor areas, or at the sea.

Once these strengthened uplink signals can be correctly decoded by the base station, the base station - and optionally supported by a higher-level instance - can provide means to strengthen also the downlink signal and improve the quality of the channel of the considered connection for uplink and downlink direction.

The present invention is not limited to 3GPP technologies such as 4G, 5G, or Sixth Generation (6G) technology, it is also applicable to other mobile network technologies that are limited in uplink direction.

In the following, an exemplary procedure for increasing the uplink transmit power is described:
The uplink transmit power can be increased by coupling the UE with one or several other UEs or, alternatively, by coupling the UE with an external device to amplify the uplink signal. It focuses on unbalanced systems between uplink and downlink direction of any network technology.

The term device is preferentially used to differentiate between UEs, such as Smartphones or tablets, and other technical equipment (device) that can be used or enhanced to be used for mobile communication.

A coupling of the uplink signal of several UEs can be effected, for example, as follows:
Outside of the usual coverage area, the UE can be linked with one or several other UEs either via cable or via a wireless interface, e.g. Bluetooth or any kind of device-to-device communication e.g. for proximity services standardised in 3GPP Release 13 or Vehicle-to-Vehicle (V2V) and Vehicle-to-X (V2X) communication standardised in 3GPP Release 14 and successors.

According to the presented invention, coupling or linking of several UEs can allow a unidirectional synchronisation of messages and data to be transmitted from several UEs at the same time.

Figure 1 shows an example for coupling of two UEs.

UE₁ (100) is coupled via the interface 110 to UE₂ (120). The messages to be transmitted in uplink direction via the air interface of the mobile network can be synchronised via this local interface. In addition, the physical parameters like transmit power, frequency and time for transmission as well as the format including Modulation and Coding Scheme (MCS) can be synchronised.

The synchronisation is unidirectional i.e., UE₁ defines the data and tasks and informs UE₂ about them. UE₂ cannot respond to UE₁, it only executes the defined tasks. Both UEs use their air interfaces 130 and 140 for radiating the data in uplink direction.

In downlink direction only the path to UE₁ is relevant (150), UE₂ cannot react on any message received in downlink direction.

For this purpose, UE₂ can be switched into a passive mode, in which it preferably only executes the tasks received from UE₁ via the local interface 110.

The following description uses the 3GPP 5G Stand-Alone (SA) network as an example, but the described invention is not limited to 5G SA network technologies.

After switching on the UE in a 5G SA network, the initial attach mechanism and / or procedure and / or process is executed starting with downlink synchronisation and reception of System Information Block (SIB) data.

After successfully decoding the SIB messages, the UE starts the Random Access Channel (RACH) procedure for uplink synchronisation with the network.

The next steps are execution of the Radio Resource Control (RRC) establishment procedure and sending the registration request message from the UE to the 5G base station (gNB), followed by the authentication process and security process.

After completing the security process, a registration accept message is sent from the mobile network to the UE. The UE is now successfully registered in the 5G network.

The gNB sends a RRC reconfiguration message to the UE including necessary configuration information. For establishing a data session, the UE sends a Packet Data Unit (PDU) session establishment request which is answered by the gNB with the PDU session establishment accept message containing the PDU session configuration information.

After this procedure, the UE is ready for data transmission via the established PDU session. This procedure is defined in the 3GPP standard and cannot be changed.

A difference between the method of the present invention and prior art solutions is that the messages sent in uplink direction can be transmitted from several UEs at once and not only from one UE.

In an uplink limited network scenario, the UE is able to decode the downlink SIB messages. The UE starts the RACH procedure and transmits a randomly chosen preamble. However, the gNB is not able to successfully decode the signal and cannot respond with a timing adjustment. Thus, the UE is not able to align its transmission timing with the gNB.

The UE cannot successfully execute the RRC connection establishment procedure and send the registration request. Lack of transmission power finally prevents the UE from successfully accessing the network. It will not receive the registration accept message from the network.

According to the present invention, any interruption of this initial attach procedure by not receiving the corresponding downlink message within a defined period or a too low downlink receive level measured by the UE during the initial cell search procedure can be used as indicator by the UE that also in the reverse direction, the uplink signal of the UE is not strong enough to connect to the network.

For this purpose, a timer can be used by the UE. If the answer from the network with the corresponding downlink message is not received before expiry of this timer, the previous uplink message sent by the UE was most probably not received by the gNB due to a too weak uplink signal.

For using the second criterion, a too low downlink receive level measured by the UE, a configurable level-based threshold can be defined as trigger point for initiating the Uplink Coupling Mode.

To consider also interference as criterion, a further quality-based threshold can be used by the UE as trigger point for starting the Uplink Coupling Mode.

According to the present invention, this information can be indicated to a user in a user interface, e.g. shown on the display of the UE and / or indicated via an acoustic and / or haptic signal and a procedure to connect to another UE in the vicinity can be proposed to the user for strengthening the uplink transmission.

The proposal can offer a manual procedure for connecting the UEs e.g., via a cable and an automatic procedure, wherein the UE searches for other UEs in the vicinity to establish a wireless connection e.g., via Bluetooth or a direct wireless device-to-device connection that is supported e.g. in 3GPP 5G networks.

An uplink coupling procedure can be performed, for example, as follows:
Figure 2 shows an exemplary uplink coupling procedure that starts in step 200.

In one embodiment of this invention a cable is used to connect the UEs via their interfaces, preferably via the Universal Serial Bus (USB) port. This process is demonstrated in step 210 of this procedure. For connecting the first UE with the second UE and the second UE with the third UE, a specific cable can be used to connect several UEs via one USB port.

After having established the physical connection to one or several UEs, a menu 220 can optionally be opened at the Graphical User Interface (GUI) of the first UE to activate the Uplink Coupling Mode configuration. The activation of this configuration must preferably be acknowledged by the other user of the second UE, preferably via its GUI.

In a preferred implementation, the menu for configuring the Uplink Coupling Mode is opened by swiping on the touchscreen from top to down or from left to right or vice versa once the UE is connected to another UE. The menu can offer the activation of the Uplink Coupling Mode and the selection between a manual connection, which is the default setting for UEs coupled via a cable, or an automatic mode, in which the UE searches for other UEs in the vicinity to connect.

A wireless interface can be used, e.g. a Bluetooth connection or any other kind of device-to-device communication, to couple the UE with one or several other UEs.

The menu-guided GUI operation (220) can also be started before the physical connection to another UE or device (210) is established, Figure 2 shows only an example for the sequence of the uplink coupling procedure.

By activating the Uplink Coupling Mode, a unidirectional synchronisation (230) of the messages to be sent in uplink direction can be enabled, as well as the time and frequency for sending this message, the physical parameters like Modulation and Coding Scheme and transmit power, and the contents of the message etc.

A unidirectional synchronisation of the messages can be, for example, effected as follows:
Before executing the RACH procedure, UE₁ can transfer the used format and contents of the message via the local link to the interconnected UEs (UE₂, UE₃, ...) and synchronise the time, frequency, and power for transmitting the message. This procedure is demonstrated in step 230 of Figure 2.

The interconnected UEs act like an amplifier of the signal. Thus, the total transmit power is increased by the output power of the interconnected UEs. In the link budget, the UE output power is accordingly increased.

For the RACH procedure, a power ramp-up mechanism can be used. The information about the used transmit power can be transferred from UE₁ to the other coupled UEs.

A switching of the coupled UEs into passive mode for downlink can be, for example, effected as follows:
An aspect of the present invention can be that in Uplink Coupling Mode, the downlink signal can only be processed by the first UE in the chain i.e., UE₁. This aspect makes the solution simple since a data transfer between the UEs for downlink data is not necessary.

This is possible because the downlink is not considered as the limiting factor and the scope of the presented invention is to strengthen the uplink. Means for improving the downlink are described below.

No alignment of the data received from the network in downlink direction and no coordination of the resources reserved for the uplink transmission reported from the network via the Physical Downlink Control Channel (PDCCH) is necessary, just a straightforward replication of the data sent in uplink direction. This procedure is demonstrated in step 240 of Figure 2.

A simultaneous transmission of messages and data in uplink direction from several UEs can, for example, be achieved as follows:
By activating the Uplink Coupling Mode, the same messages and data can be sent at the same time from all connected UEs to the base station by using the same uplink frequency. This procedure is demonstrated in step 250 of Figure 2.

The contents of the messages can be replicated, as well as the contents of signalling messages on the Physical Uplink Control Channel (PUCCH). The content of data traffic to be sent via the Physical Uplink Shared Channel (PUSCH) can also be sent from UE₁ to the other UEs via their local connections and finally be transmitted in uplink direction at the same time using the same frequency and power as UE₁.

After successfully executing the initial attach procedure and establishing a connection, the base station assigns resources to the UE for uplink transmission.

The scheduling information is sent via the PDCCH to the UE and this information is only relevant for the first UE in the chain of coupled UEs.

In Uplink Coupling Mode, the downlink signals received by UE₂ to UEₙ can preferably not be processed. These auxiliary UEs are preferably only used as amplifier of the uplink signals. All information useful for these UEs in this passive mode is preferably provided by UE₁.

If the base station assigns more than one Physical Resource Block (PRB) per Transmission Time Interval (TTI) (4G) or symbol (5G) to UE₁ for uplink scheduling, UE₁ preferentially overrides multi-PRB assignment and uses only one PRB to send data, preferentially at its maximum transmit power.

The coupled UEs can be informed via the local interface 110 (Figure 1) and 310 (Figure 3) on which PRB the data are scheduled i.e., which frequency to be used and the time.

Furthermore, a robust MCS can be used for uplink encoding. Even if Adaptive Modulation and Coding (AMC) decides on a less robust MCS, the UE can override the output of the AMC procedure and use a robust MCS at poor coverage.

In a further embodiment of this invention, not the same transmit power can be used by all UEs, higher or lower transmit power may be used by the coupled UEs depending on their individual capabilities and the requirements. Each of the coupled UEs can be operated at its individual maximum transmit power.

Coupling of UEs or devices can allow to switch between the devices that communicate with the mobile network. Data to be transmitted can be collected and sent via the internal link to the device of the best receive signal.

This device sends the data to the base station and receives data in downlink direction from the base station. If the power for the uplink signal is not sufficient, this device coordinates the transmission of uplink signals sent from all coupled devices.

As an example, three devices are connected, one is a Narrow-Band Internet of Things (NB-IoT) gas meter, another one is a NB-IoT water meter and a third device is a NB-IoT smart power meter, which are installed in one room and characterised by poor radio channel conditions.

The three devices enter the uplink coupling mode and exchange information about the receive level and receive quality of the signals received from the base station.

The device of best radio channel conditions is defined as the "first device" (or user equipment with the other device acting as "devices") in this chain.

It defines the messages and data to be sent in uplink direction from all devices. In downlink direction it forwards the data, i.e. acknowledgements from the base station about correctly received data to the connected device.

This embodiment requires a bi-directional communication between the devices.

Generally, the terms synchronous and simultaneous can in some instances be regarded as synonyms.

A coupling of the UE to an external device, such as an external amplifier and / or transmitter, can be, for example, achieved as follows:
In a further embodiment of this invention, the UE can be connected to a device in the form of an external amplifier to amplify the signal to be transmitted in uplink direction.

This configuration is shown in exemplary fashion in Figure 3.

Similar to the procedure described in section above, the messages and data to be transmitted can be transferred from the UE (100) in Figure 3 to the external amplifier (300) and then transmitted via the air interface (140) in a synchronised manner.

For this purpose, the external device can be equipped with a processor, memory, interface, amplifier, and power supply, if not already provided.

For example, an external device like a power bank is enhanced to act as a signal amplifier. These kinds of external devices are often carried along with UEs and dispose of a USB port for charging the UE. This interface can also be used for data transfer, or a further data interface can be added.

Additional hardware like processor, amplifier, high-frequency converters and an antenna can be added to radiate the signals. Power supply can preferentially be provided by the battery system of the power bank/device.

Other devices that have an amplifier, but no Subscriber Identity Module (SIM) card installed like laptops can be used in the way described in this invention as a device functioning as an external amplifier with a cable or wireless connection to the UE.

Figure 3 shows the coupling of the UE (100) to the device / external amplifier (300) via the interface 310 to transfer the contents of uplink messages and data to be transmitted via the air interface 140 to the base station.

A time synchronisation between the UE and the external amplifier is necessary and the information about the physical parameters like transmit power, format, frequency and time for scheduling the messages can be transferred from the UE to the external amplifier.

An identification of the capabilities of the devices coupled to the first telecommunications device can for example, be achieved as follows:
In a further embodiment of this invention, the capabilities of the devices can be identified via communication between the coupled devices, especially their antenna capabilities. This is illustrated in Fig. 4.

If one of the coupled UEs has better capabilities than the other UEs and / or devices, the complete communication with the base station in uplink and downlink direction can be done via that device.

An example is an automotive radio system with large antenna systems integrated into the roof of the car.

Another example is a large television set with integrated or external antennae, which can be used as amplifier for mobile communication.

After a query of the device capabilities, a UE located in another room can be connected e.g. via Wireless Fidelity (WiFi) to the television set and the mobile communication in uplink and downlink direction can be done via the antenna of this television set. This query requires a bi-directional communication between the devices, e.g. via device-to-device communication or WiFi or Bluetooth.

Figure 4 shows coupling of the UE (400) to the Device (410) via the local interface 420 to identify the device's antenna capabilities.

If the capabilities are better than that of the UE, the UE can inform the device via the local interface 420 to setup the connection to the base station and execute the data transfer.

The device can adapt the Quality of Service (QoS) restrictions of the UE as long as they are in coupled mode.

User data received in downlink direction (440) from the base station can be used at the device or can be transmitted from the device to the UE depending on their configuration.

Figure 5 is an extension of Figure 2 and shows in step 510 the query and identification of the device's capabilities during the coupling procedure according to this embodiment.

Figure 5 describes an exemplary whole process of the coupling procedure and identification of the device's capabilities from the starting point of the coupling procedure (500).

As further enhancement to the procedure described in Figure 2, the definition whether the received data are used on the device or transferred via the local interface to the UE and used by the UE, or on both terminals, the device and UE, is done in step 550.

Finally, the alignment between the UE and the device is done in step 560 and the check whether the coupling mode can be maintained.

An uplink boost can be achieved, for example, as follows:

For increasing the total uplink transmit power in a poorly covered area, a temporary power boost can be applied, and the maximum transmit power defined for the UE can be provided at each transmit antenna.

Instead of using e.g. in total 200 mW for a UE of power class 3, four times 200 mW can be used for a UE with four transmit antennae.

To avoid a significant increase of the uplink interference in the network, this configuration is preferably only applied if the uplink signal is too weak to connect to the network or being served by the network. Criteria are again the trigger points defined in above.

If the uplink signal is still too weak to connect to the network, the transmit power of the UE can be increased beyond the nominal maximum transmit power for a short period of time.

Preferentially a power capacitor can be used that is able to discharge a high amount of energy within a short period of time.

If the connection to the mobile network has successfully been established, the aspect of uplink boosting can be signalled from the UE to the network and can be considered by the base station for scheduling uplink resources to the UE in poor coverage areas.

It can be realised such that resources are assigned in one TTI and the next scheduled resources can be several TTIs later to allow recharging of the power capacitor within this time.

Further, a pattern can be stored in the memory of the UE that defines when the UE is allowed to transfer uplink messages.

The pattern is preferably linked with the International Mobile Equipment Identity (IMEI) of the UE and Physical Cell Identity (PCI) of the base station to define unique slots for uplink transmission of the UE and to avoid interference with other UEs in the vicinity trying to execute the random access procedure at the same time.

This is beneficial especially during this phase, when the scheduler did not yet overtake these coordinative tasks. Based on this pattern, uplink interference can be reduced, and the success of the procedure be increased.

A multi-step procedure to increase uplink power can, for example, be performed as follows:
Once a weak uplink coverage is identified by the UE in coupled or connected mode, a muti-step procedure can be applied to increase the uplink transmit power and thus to strengthen the uplink.

This procedure can be applied as an automatism if the UE moves towards poor coverage areas and a weak uplink is detected by the UE, e.g. by
- Transmitting already at maximum power, i.e. transmit power is not reduced by uplink power control.
- Power headroom report sent from the UE to the network indicates headroom values equal or lower than zero dB.
- A high number of retransmissions in uplink direction requested by the base station.
- In addition, the network knows the position of the UE via localisation and obtains knowledge of the coverage at this position from radio network planning data or information from other UEs at this geographical position.

For example, the multi-step procedure can comprise the following steps:
*Step 1*
   In a first manual step, the weak uplink is indicated to the user and the user manually starts a procedure to allow UE₁ to search for other UEs in the vicinity of UE₁ and to prepare the negotiation of coupling the uplink, and / or
*Step 2*
   In a second step, the UE autonomously identifies degrading quality of the connection and couples its uplink with UEs in the vicinity.

A procedure for adding transmit diversity gain can, for example, be performed as follows in a method of the present invention:
By coupling the uplink of several UEs, a diversity gain can be achieved that provides benefits especially in interference limited scenarios.

In the procedure for adding transmit diversity gain at least one of the following aspects or steps can be performed or used:
- Space diversity can be achieved from the local distance of antennae of the UEs.
- Polarisation diversity can be achieved by different directions of the antennae of the UEs. For each coupled UE or device, the Poynting vector, the vector of the electric field, and the vector of the magnetic field of the emitted electromagnetic waves have a different orientation compared to that of UE₁ and provide multi-path propagation of the signal. If one path is strongly attenuated or interfered, signals from another path might be successfully decoded by the receiver.
- Time diversity can be achieved, if the signal from one UE is transmitted shortly later than the same signal transmitted from the other UE. Since interference is strongly time-variant, receiving the same signal with a short delay but not interfered can be beneficial for the equalizer of the base station to correctly decode the signal.

In a method according to the present invention, the delay between transmission of the signal from UE₁ and transmitting the signal from UE₂ or further UEs or devices can sequentially be increased for optimising the transmit diversity gain.

For example, UE₁ can inform the coupled UEs via the local interface (110 in Figure 1 and 310 in Figure 3) about the delay or sequence of delay increase to transmit the uplink signal.

The delay for which decoding of the uplink signal at the base station was most successful can be stored and used for the further communication for this connection in the present configuration. As a measure for the decoding success, a successfully executed RACH procedure can be used and / or a low number of requested retransmissions of the uplink signal.

The diversity gain achieved by this measure preferably allows to further shift the unbalance of the link budget towards more balanced links.

A procedure for increasing the uplink antenna gain can, for example, be performed as follows:
A further component in the link budget is the antenna gain. An increase of the antenna gain can be achieved by integrating antenna panels into wearables e.g., anoraks that are used for mountain climbing, sailing, or other outdoor activities in poorly covered areas. Also, backpacks or other equipment can be supplied with antenna panels.

In addition, or alternatively to the Uplink Coupling Mode the antenna of the UE can be connected to this external antenna and used for transmission of the uplink signals and reception of downlink signals.

The antenna pattern of this external antenna typically has better radiation and reception characteristics than the antenna of the UE, for example by using more transmit and receive paths.

The antenna of wearables or equipment like backpacks can be connected to the UE e.g., via a cable. An aluminium foil or other material can be used to avoid radiation of the electromagnetic waves towards the person and to direct the radiation in one specific direction.

Furthermore, a method according to the present invention can comprise a step of transmission of a preconfigured emergency message. This can be, for example, performed as follows:
For sending emergency messages in a poorly covered area, a message with prepared content can be selectable preferably via the menu of the Uplink Coupling Mode app. This message can include the geographical position of the UE, the PCI of the serving base station, and a prepared text e.g., to request support or rescue.

These data can be automatically inserted by the app, no intervention by the user can be necessary. Furthermore, in a preconfigured mask the number of people in an emergency situation and the kind of emergency situation can be selectable by the user. Means for editing of the message can also be supported.

The content of the message can be duplicated and transferred via the local interface (110 in Figure 1 and 310 in Figure 3) to the coupled UEs (120 in Figure 1) and external devices (300 in Figure 3) for amplification of the signal. It can be transmitted simultaneously from all coupled devices.

To increase the likelihood of correctly decoding the message at the receiver side, a robust MCS can be used for channel coding.

The destination of the message can be Operations, Administration and Maintenance (OAM) that represents the processes and functions for provisioning and managing a network or an element within the network, any other Operation and Maintenance Centre (OMC) of the mobile network, or any other support centre, from which it can be processed and forwarded to a first aid coordination centre.

OAM and OMC represent any instance of the network that is able to process data and send commands to other entities of the network e.g., base stations.

To improve the success of transmitting important messages, e.g. emergency notifications or executing emergency calls, proactive re-transmissions in time domain can be applied. This is beneficial especially in interference limited scenarios.

The transmission of packets of data services, e.g. text messages, can be repeated several times using the same or other frequencies (PRBs), preferentially on the coverage layer.

This mechanism can provide redundancy in the time domain and improves the probability of transmitting data on a low interfered PRB.

This mechanism can also be applied for speech calls. Speech is typically segmented into frames of 20 ms length, which are transmitted via several PRBs. According to the presented invention, the transmission of each PRB can proactively be repeated one or several times for redundant transmission.

This procedure can only be applied for speech calls of short duration, e.g. emergency calls, and can be selectable via the menu of the Uplink Coupling Mode app. This redundancy extends the time until all speech frames are transmitted but provides means to correctly decode the speech frames at receiver side taking advantage from the fact that some PRBs are less interfered than others.

The caller will be able to speak for some seconds and will need time to receive a response from the called party but in emergency situations it is more important to enable a communication though its quality is low.

The emergency call is just an example for important messages. This functionality can in principle also be applied to maintain a basic communication in disaster situations.

Another option is to establish an emergency call automatically in a technology that offers higher uplink transmit power, e.g. via Global System for Mobile Communications (GSM) or via a satellite link, to execute the measures described for improving the downlink and uplink channel quality and then handing over the connection to the terrestrial mobile network.

Furthermore, a method according to the present invention can comprise network assisted means to improve the uplink channel quality. Exemplary network assisted means are illustrated as follows:
Based on the information included in the emergency message, the geographical position of the UE is known, and the network has knowledge about the base station that received the message.

Via this serving base station and optionally supported by a higher-level instance, means can be identified and coordinated to further strengthen the uplink signal of the UE that sent the emergency message.

Improving the quality of the uplink channel can be achieved by one or more of the following exemplary steps:
- The serving base station can be informed by the higher-level instance or OAM/OMC about the critical radio channel conditions of the connection to this UE. To reduce adjacent channel interference, the base station shall not assign uplink resources on adjacent PRBs in the frequency domain, time domain, or both.
- For reducing intra-site co-channel interference, the serving base station shall not assign uplink resources (PRBs) in other sectors of the site that use the same frequency and time-slot combination.
- For reducing inter-site co-channel interference, OAM/OMC or the serving base station can inform the adjacent base stations not to assign uplink resources that use the same frequency and time-slot combination in neighbouring sectors as used for the connection between the UE that sent the emergency message and its serving base station.
- If the higher-level instance notices that the UE moves in a direction of poor uplink radio channel conditions, these preventive steps can be done in advance, if sufficient capacity is available.

Further, network assisted means can be used to improve the downlink channel.

To improve the overall quality of the connection, also means for improving the downlink channel can be provided. This includes a coordination of downlink scheduling between the serving base station and the adjacent base stations, optionally supported by the higher-level instance.

The higher-level instance has the advantage of correlating the position of the UE with the coverage area of the serving cell and adjacent cells of other base stations.

If the UE is located at the cell border of two sectors from different base stations, the serving base station or the higher-level instance can instruct the neighbouring base station to transmit the same downlink signal at the same time using the same frequency. In case that both sectors belong to the same base station, the serving base station can coordinate scheduling of the same signal in both sectors.

This downlink boost via different sectors improves the likelihood of correctly decoding the data received by the UE.

The use of the higher-level instance is an option to enrich the information of the position of the UE and correlate it with radio planning and signal propagation data, as well as with data measured by other connections. A basic coordination between several sectors is also possible by the base stations using communication between several base stations via the X2 or Xn interface.

In a preferred implementation, further features like Distributed MIMO (D-MiMo) are used to improve the quality of the connection.

Another option is to keep the channel clean by avoiding interference from neighbouring cells. For this purpose, the serving base station can instruct the base stations of neighbouring cells not to consider for scheduling those PRBs that are adjacent to the PRB(s) used for the communication to the UE in the emergency situation.

Thus, co-channel interference can be avoided by blanking exactly these PRBs and adjacent channel interference by blanking neighbouring PRBs in time and frequency domain.

Also at receiver side, means for improving the quality of the downlink signal can be provided:
For UEs that dispose of several receive paths i.e., separate antennae for uplink reception, receive diversity can be used and the signals received via different antenna paths can be combined to improve the likelihood of correctly decoding the downlink signals. This procedure can be executed autonomously by the UE.

Once the UE leaves the poorly covered area, this functionality can be disabled again, if not needed for other purpose.

Furthermore, a method according to the present invention can comprise a step of Dynamic bandwidth adaptation. This is described in an exemplary fashion as follows:
Since transmit power is distributed among all PRBs for a given transmission time interval, a reduction of the bandwidth allows to increase the transmit power on the remaining PRBs.

This functionality is dynamically applied in prior art technologies in uplink direction by the combination of the uplink power control algorithm with power headroom reporting and bandwidth adaptation by the base station. In downlink direction bandwidth adaptation is done statically or semi-statically.

According to the present invention, the downlink bandwidth can dynamically be adapted to concentrate the transmit power on fewer PRBs and thus to increase the signal strength at the cell border and extend the coverage area.

Power boosting on physical shared channels also requires power increase on physical control channels used for signalling. This can be achieved by an unequal distribution of the power between shared and control channels.

To reduce negative impact on capacity the dynamic adaptation of the bandwidth can be executed in short periods (some 10 ms) and ultra-short periods of slot and symbol duration.

Boosting of the uplink and downlink signal to provide better coverage at the cell border and increase the cell area is a trade-off between capacity and coverage. Active antennae can be used for this purpose.

Desirable requirements of the higher-level instance can be summarised as follows.

The higher-level instance can be used to monitor the link quality of active UEs and provide means to stabilise the link quality once the UE enters a poorly covered area identified by a receive level falling below a configurable threshold and / or a receive quality falling below a further configurable threshold. In connected mode, the link quality of both directions can be evaluated in uplink and downlink direction.

Once a UE reaches the cell border, indicated by a violation of the receive level and / or receive quality criterion configured via thresholds, the higher-level instance can assist the UE in finding other UEs in the vicinity and establishing the Uplink Coupling Mode with one or several other UEs.

Further actions to keep the connection alive can be initiated. One of these actions is that two or several base stations transmit the same data. The new aspect with reference to prior art technologies is that this functionality is deactivated after release of the call or data service, respectively.

Further actions are to temporarily activate additional interference-mitigating features or to shortly modify the tilt of the antenna, i.e. to perform a short-term optimisation of the channel quality, which will be removed after release of the current connection to the UE. Another use-case for a temporary optimisation is to increase the cell range for UEs on a ship leaving or approaching the coast.

For UEs in idle or inactive mode, assistance can be provided to enter the Uplink Coupling Mode with other UEs for switching from idle or inactive to connected mode.

A method according to the present invention can comprise a procedure for interference-free resource assignment. This is described in an exemplary fashion as follows:
The mechanisms described herein to achieve interference reduction on selected radio channels can be generalised as an optional mechanism for specific connections.

For these connections, no data can be scheduled on adjacent PRBs in time and frequency domain in the serving cell as well as adjacent cells. Blanking of adjacent PRBs can be applied for uplink and / or downlink direction.

This functionality reduces the capacity of the network but improves the quality for selected services and / or users, e.g. for ultra-high reliability services.

A method according to the present invention can comprise a step of Use of the Uplink Coupling Mode to increase data throughput. This can be, for example, achieved as follows:
The Uplink Coupling Mode can not only be used as power boost in coverage limited scenarios, but also as quality enhancement for throughput sensitive applications.

To improve the uplink throughput, the increase of the uplink power by coupling several UEs leads for the considered connection to a higher Signal-to-Interference-plus-Noise Ratio (SINR) that allows the utilisation of higher MCS and consequently to an increase of the uplink throughput. It does not directly reduce the capacity of the uplink since several UEs transmit data simultaneously using the same frequency.

However, a higher transmit power increases the interference in the network, which in turn leads indirectly to lower quality for the other connections. For example, for an uplink file transfer, a second UE can be used and both UEs are operated in Uplink Coupling Mode

To avoid an unnecessarily high increase of the interference, this uplink boost functionality can be linked to a poor uplink coverage situation, which can be identified by the UE for example by a low downlink receive level or a high downlink path loss, which is estimated in prior art technologies by the UE to calculate its uplink transmit power in the uplink power control algorithm (3GPP TS 36.213 [2] and 3GPP TS 38.213 [3]).

In other words, aspects of the present invention can be summarised as follows:
- The present invention provides a method for strengthening the uplink signal by coupling mobile devices and preferentially identifying the coupled device with the best communication capabilities to get access to the mobile network in uplink limited networks and to be used for the subsequent communication in poorly covered areas of the network.
- A method according to the present invention can comprise a step of establishing a unidirectional synchronisation between these devices for messages and data to be transmitted from each device in uplink direction to the base station of the mobile network.
- A method according to the present invention can comprise a step of switching the UEs coupled to the first UE into passive mode for downlink direction to avoid any synchronisation of downlink data or messages between coupled UEs. In passive mode, data received in downlink direction should not be processed or executed.
- A method according to the present invention can comprise a step of simultaneous transmission of the uplink messages and data from all connected UEs or devices.
- A method according to the present invention can comprise a step of using of an interruption during the initial attach procedure as trigger point to automatically start the Uplink Coupling Mode. The interruption is characterised e.g. by the expiry of a timer for the reception of downlink messages by the UE. A further triggering point is a downlink receive level and / or receive quality below configurable thresholds. The downlink receive level and quality is measured by the UE and allows conclusions about the path loss and interference on the air interface.
- A method according to the present invention can comprise a step of temporary overpowering using a power capacitor to increase the transmit power of each UE or device beyond the nominal maximum power. The application of this uplink boost can be signalled to the network and radio resource management of the base station can consider this aspect when scheduling uplink resources to other UEs.
- A method according to the present invention can comprise a step of transmission of the uplink messages in the RACH procedure according to a pattern stored in the memory of the UE and linked to its IMEI and the PCI of the base station to define when the UE has to transmit the uplink messages.
- A method according to the present invention can comprise a step of coupling of the internal antenna of the UE with an external antenna integrated into wearables or other external equipment carried by users / subscribers and transmission of the uplink signals and reception of downlink signals via this external antenna.
- A method according to the present invention can comprise a step of transmission of a preconfigured message including the position of the user equipment and / or device and information about the identity of the serving cell to the network in order to provide means from network side to improve the channel quality in uplink and downlink direction.
- A method according to the present invention can comprise a step of proactive re-transmissions applied in time domain in poorly covered areas for important services such as emergency messages or emergency calls or communication during disaster situations.
- A method according to the present invention can comprise a step of dynamic bandwidth adaptation in downlink direction and concentration of transmit power on fewer PRBs with unequal power distribution to increase the signal strength at the cell border and extend the coverage area.
- A method according to the present invention can comprise a step of introduction of a higher-level instance to monitor the link quality of active UEs and supporting them to establish the Uplink Coupling Mode with UEs in the vicinity. The higher-level instance can also temporarily coordinate the transmission of base stations, adapt antenna tilts, activate features and deactivate these short-term optimisations after release of the call or data service of the connection under critical radio channel conditions.
- A method according to the present invention can comprise a step of application of the Uplink Coupling Mode to increase data throughput and quality.

The method according to the present invention has at least the technical benefit of allowing to extend the coverage area of uplink limited mobile networks without the need of deploying additional base stations.

It provides a flexible mechanism to reduce coverage holes and can also be used in emergency or disaster situations in areas outside the standard coverage area of the mobile network.

### Abbreviations

- 3GPP: 3^{rd} Generation Partnership Project
- 4G: Fourth Generation
- 5G: Fifth Generation
- 6G: Sixth Generation
- AMC: Adaptive Modulation and Coding
- D-MIMO: Distributed Multiple Input Multiple Output
- gNB: 5G base station
- GSM: Global System for Mobile Communications
- GUI: Graphical User Interface
- IMEI: International Mobile Equipment Identity
- MCS: Modulation and Coding Scheme
- MIMO: Multiple Input Multiple Output
- NB-IoT: Narrow-Band Internet of Things
- OAM: Operations, Administration and Maintenance
- OMC: Operation and Maintenance Centre
- PCI: Physical Cell Identity
- PDCCH: Physical Downlink Control Channel
- PDU: Packet Data Unit
- PRB: Physical Resource Block
- PUCCH: Physical Uplink Control Channel
- PUSCH: Physical Uplink Shared Channel
- QoS: Quality of Service
- RACH: Random Access Channel
- RRC: Radio Resource Control
- SA: Stand-Alone
- SIB: System Information Block
- SIM: Subscriber Identity Module
- SINR: Signal-to-Interference-plus-Noise Ratio
- TTI: Transmission Time Interval
- UE: User Equipment
- USB: Universal Serial Bus
- V2V: Vehicle-to-Vehicle
- V2X: Vehicle-to-X
- WiFi: Wireless Fidelity

### Literature

[1] 3GPP TR 25.814, "Technical Specification Group Radio Access Network; Physical layer aspects for evolved Universal Terrestrial Radio Access (UTRA)", http://www.3gpp.org.
[2] 3GPP TS 36.213, "Technical Specification Group Radio Access Network; Evolved Universal Terrestrial Radio Access (E-UTRA); Physical layer procedures", 2013, http://www.3gpp.org.
[3] 3GPP TS 38.213, "Technical Specification Group Radio Access Network; NR; Physical layer procedures for control", 2022, http://www.3gpp.org.

## Claims

1. Method for improving uplink strength for mobile telecommunication, wherein if a mobile user equipment detects a need for improving uplink strength,
- the mobile user equipment performs a scan for the presence of at least one device suitable for telecommunication, and
if at least one device is detected,
- the mobile user equipment enters a coupling mode to couple to the at least one device and induces the device to enter a passive mode, and
- the mobile user equipment controls the at least one device to replicate an uplink signal to be emitted by the mobile user equipment so that the mobile user equipment and the at least one device synchronously and / or simultaneously emit the uplink signal to thereby increase overall uplink signal strength; and / or
- the communication capabilities of mobile user equipment and the at least one device are identified and the device having the best communication capabilities is chosen to emit the uplink signal to be emitted by the mobile user equipment.

2. Method according to claim 1, wherein the mobile user equipment is a smartphone or tablet and the device is a smartphone or tablet or any other device capable of increasing uplink strength or enhanceable to be capable of increasing uplink strength, such as an antenna, a device equipped with Internet of Things-Technology, a Laptop or a power bank.

3. Method according to claim 1 or 2, wherein multiple devices are detected by the mobile user equipment, the mobile user equipment enters a coupling mode to couple to each of the multiple devices and induces each of the multiple devices to enter a passive mode, and the mobile user equipment controls each of the multiple devices to replicate an uplink signal to be emitted by the mobile user equipment so that the mobile user equipment and each of the multiple devices synchronously emit the uplink signal to thereby increase overall uplink signal strength.

4. Method according to claim 3, wherein the mobile user equipment detects a maximum transmission strength of each of the multiple devices.

5. Method according to one of the preceding claims, wherein in the passive mode of the at least one device, the device does not process or execute any data received by the device in downlink direction and / or there is only unidirectional data flow from the mobile user equipment to the device having entered the passive mode.

6. Method according to one of the preceding claims, wherein there is a unidirectional synchronisation established between the mobile user equipment and the at least one device when the mobile user equipment and the at least one device synchronously emit the uplink signal.

7. Method according to one of the preceding claims, wherein the mobile user equipment detects a need for improving uplink strength 1) if the mobile user equipment detects an interruption during an initial attach mechanism/procedure/process to a base station and / or 2) if a timer for the reception of a downlink message from the base station to the mobile user equipment has unsuccessfully expired and / or 3) if a downlink receive level and / or a downlink receive quality from the base station to the mobile user equipment is detected by the mobile user equipment to be below a threshold level or outside a tolerance range.

8. Method according to one of the preceding claims, wherein, if the mobile user equipment detects a need for improving uplink strength, the mobile user equipment automatically performs a scan for the presence of at least one device and / or automatically enters a coupling mode to couple to the at least one device.

9. Method according to one of the preceding claims, wherein, when the mobile user equipment and the at least one device synchronously and / or simultaneously emit the uplink signal, the uplink signal strength is boosted beyond nominal transmit power through temporary overpowering for example by use of a power capacitor in at least one of the mobile user equipment and the at least one device.

10. Method according to one of the preceding claims, wherein the mobile user equipment and the at least one device synchronously and / or simultaneously emit the uplink signal in a Random Access Channel procedure according to a pattern stored in a memory of the mobile user equipment, wherein the pattern is preferably linked to the International Mobile Equipment Identity of the mobile user equipment and / or the Physical Cell Identity of the base station the uplink signal is intended for.

11. Method according to one of the preceding claims, wherein the device is an external antenna, preferably an antenna configured to be wearable by a user of the mobile user equipment; and the mobile user equipment is configured to couple an internal antenna of the mobile user equipment with the external antenna.

12. Method according to one of the preceding claims, wherein the uplink signal that the mobile user equipment and the at least one device synchronously and / or simultaneously emit, comprises a pre-configured message, preferably containing a location of the mobile user equipment and a Physical Cell Identity of a base station.

13. Method according to one of the preceding claims, wherein the mobile user equipment and the at least one device proactively and repeatedly synchronously and / or simultaneously emit the uplink signal until the mobile user equipment receives an acknowledgement of receipt.

14. Method according to one of the preceding claims, further comprising a step for improving downlink strength by using dynamic bandwidth adaptation and / or concentration of transmit power in fewer Physical Resource Blocks.

15. Method according to one of the preceding claims, wherein a higher-level instance, preferably an Operations, Administration and Maintenance Unit is used to monitor uplink and / or downlink signal strength of at least the mobile user equipment and / or the at least one device.

16. Apparatus, preferably mobile user equipment and / or device, configured to be used in and / or to perform a method according to one of the preceding claims.

17. Computer programme product, comprising machine-readable instructions enabling an apparatus reading the instructions to perform a method according one of claims 1 to 15.
